# EUROPEAN PATENT APPLICATION

(11) **EP 4 656 925 A1**
(43) Date of publication of application: **03.12.2025**
(21) Application number: 23918053.2
(22) Date of filing: 24.01.2023
(51) Int. Cl.: F16L 55/00, F01N 1/08

(54) **FLUID PIPING**

(71) Applicant: Nissan Motor Co., Ltd., Kanagawa 221-0023 (JP)
(72) Inventor: MIHARA, Hidefumi, Atsugi-shi, Kanagawa 243-0123 (JP); MURAKAMI, Tsuyoshi, Atsugi-shi, Kanagawa 243-0123 (JP); HAYASHI, Taiga, Atsugi-shi, Kanagawa 243-0123 (JP); KOBAYASHI, Akiko, Atsugi-shi, Kanagawa 243-0123 (JP); YOSHIDA, Tatsuya, Atsugi-shi, Kanagawa 243-0123 (JP)
(74) Representative: Global IP Europe Patentanwaltskanzlei
(86) International application number: PCT/JP2023/002103
(87) International publication number: WO 2024/157356

(57) **Abstract**

Fluid piping includes a piping main body (16) that allows a fluid to flow through its inside and a partition plate (17) that divides the inside of the piping main body into two or more flow channels along an axial direction (Y) of the piping main body. The partition plate has an end surface (171) on its upstream side. The end surface includes an inclined surface (173) that is inclined with respect to the axial direction of the piping main body, a gradual sloping surface (172) that connects an end portion (171a) of the end surface on the upstream side of the partition plate and an inner wall surface (161a) of the piping main body, and a curved surface (174) that is continuous with the gradual sloping surface and has a uniform radius (R) of curvature along the axial direction of the piping main body.

## Description

### [Technical Field]

The present invention relates to a fluid piping.

### [Background Art]

An exhaust pipe structure is known in which a partition plate is provided inside the curved pipe section of an automotive muffler to divide the exhaust gas flow channel into two or more flow channels along the extension direction of the curved pipe section (Patent Document 1). It is said that by providing a partition plate in the curved pipe section of the muffler, the exhaust gas passing through the curved pipe section is rectified, and secondary flows occurring in the curved pipe section can be prevented or suppressed.

### [Prior Art Documents]

### [Patent Documents]

[Patent Document 1] JP2004-116374A

### [Summary of Invention]

### [Problems to be solved by Invention]

When a partition plate is provided in the exhaust gas flow channel, however, the end surface on the upstream side of the partition plate has a certain thickness, which causes a problem in that vortices in the airflow due to the exhaust gas occur around the end surface, thus impairing the rectification effect of the partition plate.

A problem to be solved by the present invention is to provide a fluid piping that can suppress the impairment of the rectification effect of a partition plate provided in a fluid flow channel.

### [Means for solving problems]

The present invention solves the above problem by providing a fluid piping including a partition plate that divides the inside of a piping main body into two or more flow channels, in which the end surface on the upstream side of the partition plate includes an inclined surface that is inclined with respect to the axial direction of the piping main body (or the radial direction of the piping main body).

### [Effect of Invention]

According to the present invention, when a fluid flowing down toward the partition plate hits the end surface on the upstream side of the partition plate, the fluid flows down along the inclined surface, and therefore vortices of the airflow generated around the end surface on the upstream side of the partition plate can be eliminated while still small, before they grow large. As a result, it is possible to suppress the impairment of the rectification effect of the partition.

### [Brief Description of Drawings]

FIG. 1 is a cross-sectional view illustrating one embodiment of an automotive muffler to which the fluid piping according to the present invention is applied.
FIG. 2 is a plan view illustrating the tail pipe of FIG. 1.
FIG. 3 is a cross-sectional view taken along line III-III of FIG. 2.
FIG. 4 is a plan view illustrating part A of FIG. 2.
FIG. 5 is a plan view illustrating another embodiment of part A of FIG. 2.
FIG. 6 is a plan view illustrating still another embodiment of part A of FIG. 2.
FIG. 7 is a plan view illustrating yet another embodiment of part A of FIG. 2.
FIG. 8 is a plan view illustrating still yet another embodiment of part A of FIG. 2.

### [Mode(s) for Carrying out the Invention]

Hereinafter, embodiments of the present invention will be described with reference to the drawings. The fluid piping according to the present invention is a tubular member that allows gas, liquid, or a gas-liquid mixture to flow through its inside, and examples thereof include those composed of various materials, such as metal piping including iron, stainless steel, copper, and aluminum, synthetic resin piping including polyvinyl chloride, polypropylene, polyethylene, and polyamide, and ceramic piping including alumina and silicon nitride.

The fluid piping according to the present invention can be embodied and used as an exhaust pipe including a muffler of an automotive engine, cooling water piping of an automotive engine, refrigerant piping of an automotive air conditioning device, or air duct of an automotive air conditioning device. When the fluid piping according to the present invention is used as an exhaust pipe including a muffler of an automotive engine, the fluid is exhaust gas discharged from the automotive engine, and when the fluid piping according to the present invention is used as cooling water piping of an automotive engine, the fluid is cooling water that cools the automotive engine. When the fluid piping according to the present invention is used as the refrigerant piping of an automotive air conditioning device, the fluid is the refrigerant in the cooling cycle of an automotive air conditioning device, and when the fluid piping according to the present invention is used as the air duct of an automotive air conditioning device, the fluid is the conditioned air from the automotive air conditioning device.

In the following description, the embodiments of the present invention will be described by taking examples in which the fluid piping according to the present invention is used as an exhaust pipe including a muffler of an automotive engine, but the same configuration can be achieved and the same action and effect can be obtained when used as the cooling water piping of an automotive engine, the refrigerant piping of an automotive air conditioning device, or the air duct of an automotive air conditioning device.

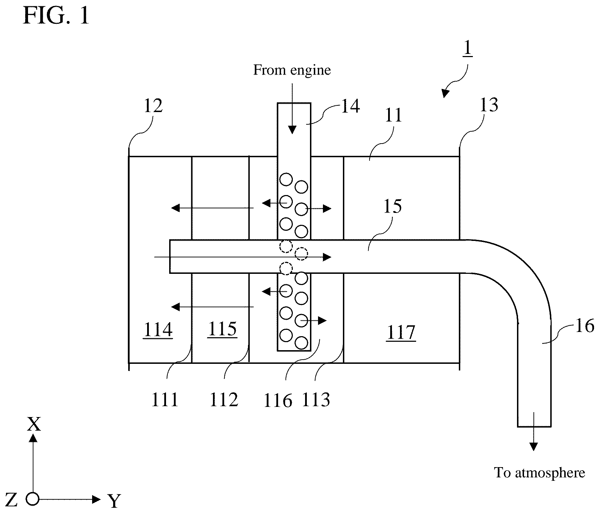

FIG. 1 is a cross-sectional view illustrating one embodiment of an automotive muffler 1 to which the fluid piping according to the present invention is applied, and the automotive muffler 1 is included in a part of the exhaust pipe of an automotive engine. The automotive muffler 1 of the present embodiment is a type that is transverse-mounted with respect to the front-rear direction of the vehicle (X direction in the figure), and has a cylindrical muffler main body 11, a left end plate 12 that closes the left end of the muffler main body 11, and a right end plate 13 that closes the right end of the muffler main body 11. In each of the drawings of FIGS. 1 to 8, the front-rear direction of the vehicle when the automotive muffler 1 of the present embodiment is mounted on the vehicle is illustrated as the X direction, the left-right direction of the vehicle is illustrated as the Y direction, and the up-down direction of the vehicle is illustrated as the Z direction.

The automotive muffler 1 of the present embodiment is provided with an inlet pipe 14 for introducing exhaust gas generated by the automotive engine into the muffler main body 11, an outlet pipe 15 for leading the exhaust gas that has passed through the muffler main body 11 to the outside, and a tail pipe 16 that is connected to the outlet pipe 15 and extends outside the muffler main body 11 to discharge the exhaust gas into the atmosphere.

The muffler main body 11 is formed in a cylindrical shape, and from the left side, a first separator 111, a second separator 112, and a third separator 113 are provided inside the muffler main body 11, which divide the interior of the automotive muffler 1 into a first chamber 114, a second chamber 115, a third chamber 116, and a fourth chamber 117 from the left side. A plurality of through holes (reference numbers omitted) are formed radially within each of planes of the first separator 111, the second separator 112, and the third separator 113, and a through hole (reference numbers omitted) is formed approximately in the center of each of the first separator 111, the second separator 112, the third separator 113, and the right end plate 13 to pass the outlet pipe 15 through.

The inlet pipe 14 is formed in a cylindrical shape and is inserted from the front of the vehicle through a through hole (reference number omitted) provided in the wall surface of the muffler main body 11, and its end portion is disposed in the third chamber 116 of the muffler main body 11. In addition, a plurality of through holes (reference number omitted) are formed along the outer circumferential surface of the part of the inlet pipe 14 located inside the muffler main body 11.

The outlet pipe 15 is formed in a cylindrical shape and extends in the left-right direction with respect to the muffler main body 11, passing through through holes (reference number omitted) formed in the first separator 111, the second separator 112, the third separator 113, and the right end plate 13, and its inlet side open end on the left side is provided so as to face the first chamber 114.

The tail pipe 16 is formed by bending a cylindrical tube into a quarter-circular arc shape, and its outlet side open end is formed so as to face the rear of the vehicle. The inlet side open end of the tail pipe 16 is connected to the outlet side open end of the outlet pipe 15 at the position of the right end plate 13.

As illustrated by the arrows, the exhaust gas discharged from the engine is introduced into the muffler main body 11 through the inlet pipe 14 and discharged radially into the third chamber 116 from a number of through holes provided at the end portion of the inlet pipe 14. Part of the exhaust gas is introduced into the second chamber 115 through the through holes formed in the second separator 112, and the remaining exhaust gas is once introduced into the fourth chamber 117 through the through holes formed in the third separator 113, then introduced into the third chamber 116 through these through holes again, and introduced into the second chamber 115 through the through holes formed in the second separator 112. The exhaust gas introduced into the second chamber 115 is introduced into the first chamber 114 through the through holes formed in the first separator 111, then introduced into the outlet pipe 15 from the opening on the inlet side of the outlet pipe 15, passes through the tail pipe 16, and is discharged into the atmosphere from the opening on the outlet side of the tail pipe 16. Thus, the exhaust gas repeatedly expands/contracts/interferes as it passes from the first chamber 114 to the fourth chamber 117, and the airflow noise is thereby reduced, that is, sound deadening process is performed.

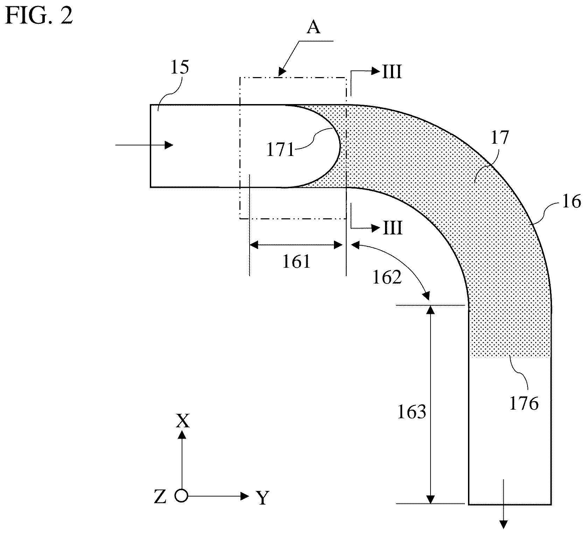

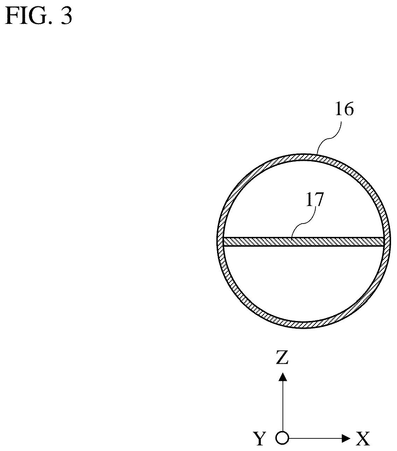

Next, the detailed structure of the rear end portion of the outlet pipe 15 and the tail pipe 16, which represent the main portion of the present embodiment, will be described with reference to FIGS. 2 and 3. The rear end portion of the outlet pipe 15 and the tail pipe 16 correspond to the piping main body according to the present invention, and the partition plate 17 described below corresponds to the partition plate according to the present invention.

FIG. 2 is a plan view illustrating the rear end portion of the outlet pipe 15 and the tail pipe 16, and FIG. 3 is a cross-sectional view taken along line III-III of FIG. 2. As illustrated in FIG. 2, the tail pipe 16 is composed of a first straight pipe section 161 that is connected to the rear end portion of the outlet pipe 15, a curved pipe section 162 of an approximately quarter-circular arc shape that is continuous with the first straight pipe section 161, and a second straight pipe section 163 that is continuous with the curved pipe section 162 and has an opening to the atmosphere.

Mainly inside the curved pipe section 162 of the tail pipe 16, as illustrated by hatching in FIG. 2 and indicated by reference numeral 17 in the cross-sectional view of FIG. 3, a partition plate 17 that divides the exhaust gas flow channel into two is disposed in the center of the pipe along the extension direction of the curved pipe section 162. The partition plate 17 of the present embodiment is provided parallel to the X-Y plane with respect to the curved pipe section 162 curved in an arc shape on the X-Y plane illustrated in FIG. 2. Through this configuration, the upper and lower flow channels of the exhaust gas divided by the partition plate 17 have equal volumes, and the ventilation resistance of the exhaust gas passing through the two flow channels is also equal.

Thus, by providing the partition plate 17 in the curved pipe section 162 of the tail pipe 16, the exhaust gas introduced through the outlet pipe 15 is rectified. As a result, the secondary flow of the exhaust gas can be suppressed to make the flow uniform with little bias, and the air flow noise generated when the exhaust gas is released to the atmosphere at the open end on the outlet side can be reduced.

The partition plate 17 of the present embodiment does not necessarily need to be provided parallel to the X-Y plane with respect to the curved pipe section 162 curved in an arc shape on the X-Y plane illustrated in FIG. 2, and may be provided perpendicularly or at a predetermined angle between parallel and perpendicular. In addition, the range in which the partition plate 17 is provided is not limited to the curved pipe section 162, and may be a part of the curved pipe section 162, or a part of the first straight pipe section 161 including the curved pipe section 162, or a part of the second straight pipe section 163 including the curved pipe section 162. It may also extend to the outlet pipe 15. However, if the length of the range in which the partition plate 17 is provided (the axial length of the piping) is unduly short, the rectification effect will be insufficient, which may not be preferred. On the other hand, if the length of the range in which the partition plate 17 is provided is unduly long, the airflow resistance caused by the partition plate 17 will be large, which may not be preferred. It is therefore desirable to provide the partition plate 17 in an appropriate range, taking into consideration the balance between the rectification effect and the airflow resistance.

Now, when the partition plate 17 is provided in an area including the curved pipe section 162 of the fluid piping through which a fluid such as exhaust gas flows, while it exerts a rectification effect on the exhaust gas, there is a problem in that vortices of the airflow due to the exhaust gas are generated around the end surface on the upstream side of the partition plate 17, impairing the rectification effect of the partition plate 17 and increasing the airflow resistance. This is because the partition plate 17 is a plate member and thus has a certain thickness. In the fluid piping of the present embodiment, therefore, an end surface 171 on the upstream side 171 of the partition plate 17 (the surface corresponding to the thickness of the plate) is configured to include an inclined surface 173 that is inclined with respect to the axial direction Y (or radial direction X) of the piping main body.

In the tail pipe 16 (corresponding to the fluid piping of the present invention) illustrated in FIG. 2, the end surface on the upstream side of the partition plate 17 means the upstream side in the direction in which the exhaust gas flows down from the engine, and is indicated by the reference numeral 171 in FIG. 2. On the other hand, the end surface on the downstream side of the partition plate 17 means the downstream side in the direction in which the exhaust gas flows down from the engine, and is indicated by the reference numeral 176 in FIG. 2. In the present embodiment, the shape of the end surface 176 on the downstream side of the partition plate 17 is not particularly limited, and may be perpendicular to the axial direction of the piping main body or may also be inclined.

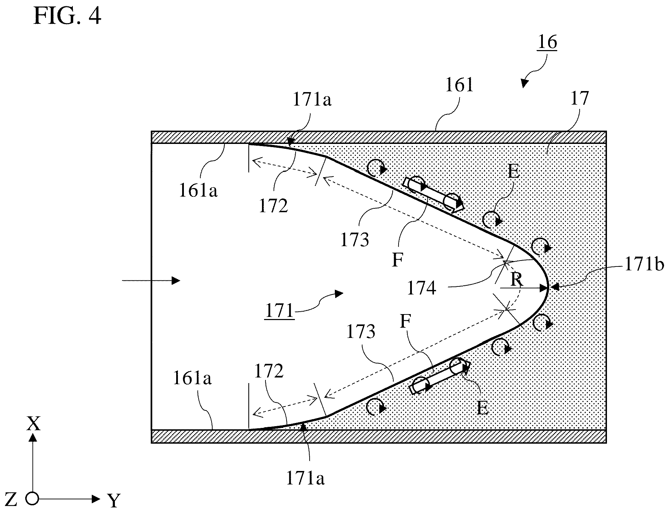

Embodiments of the end surface on the upstream side of the partition plate according to the present invention will then be described with reference to FIG. 4 to FIG. 8. FIG. 4 to FIG. 8 are plan views illustrating embodiments of part A of FIG. 2.

### «First Embodiment (FIG. 4)»

FIG. 4 is a plan view corresponding to part A of FIG. 2, illustrating a first embodiment of the end surface on the upstream side of the partition plate according to the present invention. In the embodiment illustrated in FIG. 4, the end surface 171 on the upstream side of the partition plate 17 includes a pair of gradual sloping surfaces 172 and 172, a pair of inclined surfaces 173 and 173 that are continuous with the pair of respective gradual sloping surfaces 172 and 172, and a curved surface 174. In the end surface 171 on the upstream side of the partition plate 17 of the present embodiment, one gradual sloping surface 172, one inclined surface 173, the curved surface 174, the other inclined surface 173, and the other gradual sloping surface 172 are continuously and smoothly connected from one end portion 171a of the end surface 171 to the other end portion 171a.

The pair of gradual sloping surfaces 172 and 172 are surfaces that connect end portions 171a and 171a of the end surface 171 on the upstream side of the partition plate 17 and respective portions 161a and 161a of an inner wall surface of the piping main body (the first straight pipe section 161 in the illustrated example) with smooth curves. Gradual sloping means that the inclination is gradually changed, and each gradual sloping surface 172 is a surface that is gradually angled so as to smoothly connect to the corresponding inclined surface 173 in the end surface 171.

The pair of inclined surfaces 173 and 173 are linear surfaces that are continuous with the pair of respective gradual sloping surfaces 172 and 172 and incline toward a central portion 171b of the end surface 171 on the upstream side of the partition plate 17 with respect to the axial direction Y or radial direction X of the piping main body. That is, each inclined surface 173 is inclined at an angle of more than 0° and less than 90° with respect to the axial direction Y of the first straight pipe section 161, which is the piping main body. In other words, each inclined surface 173 is a surface that is inclined at an angle of more than 0° and less than 90° with respect to the radial direction X of the first straight pipe section 161, which is the piping main body. The curved surface 174 is a surface that is continuous with each of the pair of inclined surfaces 173 and 173 and is curved in a convex shape in the downstream direction of the piping main body (the first straight pipe section 161 in the illustrated example). In other words, the curved surface 174 is a U-shaped curved surface with a certain curvature (radius of curvature = R) along the axial direction Y of the piping main body.

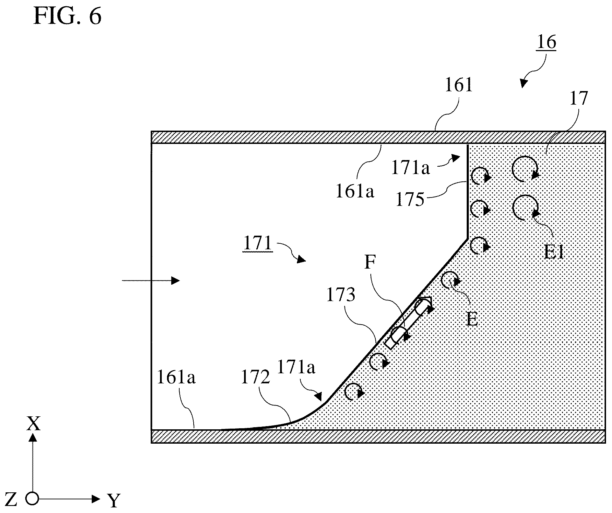

In the tail pipe 16 having the partition plate 17 formed in this way, when an airflow such as exhaust gas collides with the end surface 171 on the upstream side of the partition plate 17, vortices of the airflow caused by the exhaust gas is generated around the end surface 171. The vortices are indicated by circular arrows E in FIG. 4. By providing the inclined surfaces 173 on the end surface 171 on the upstream side of the partition plate 17, the vortices E are generated, and the negative pressure generated by the vortices E causes the airflows of the exhaust gas to flow along the inclined surfaces 173 of the partition plate 17 (indicated by arrows F in FIG. 4), slightly downstream of the inclined surfaces 173. The airflows F of the exhaust gas collide with the small vortices E before they grow immediately after they are generated around the end surface 171 of the partition plate 17, and the vortices E can be made to disappear while still in their small state. Accordingly, the generation of large vortices E1 (see the third embodiment illustrated in FIG. 6) generated by the growth of small vortices E can be suppressed, and the airflow noise generated by the large vortices E1 and the increase in ventilation resistance caused by the generation of the large vortices can be suppressed.

Moreover, by providing the gradual sloping surfaces 172 on the respective end portions 171a of the end surface 171 on the upstream side of the partition plate 17, the airflows of exhaust gas that have flowed along the inner wall surface 161a of the tail pipe 16 can easily follow the inclined surfaces 173 of the partition plate 17. This allows the airflows F to flow closer to the end surface 171 of the partition plate 17 where the vortices E are generated, and the airflows can collide with the vortices E while they are still small, causing the vortices E to disappear. As a result, the function of suppressing increases in airflow noise and ventilation resistance can be improved.

In addition, by providing the curved surface 174 at the central portion 171b of the end surface 171 on the upstream side of the partition plate 17, the airflows F flowing from respective inclined surfaces 173 are made to merge coaxially at the central portion 171b, thereby reducing the speed of the airflows F to almost zero and making it possible to suppress collision with the inner wall surface 161a of the tail pipe 16. As a result, the function of suppressing increases in airflow noise and ventilation resistance can be further improved.

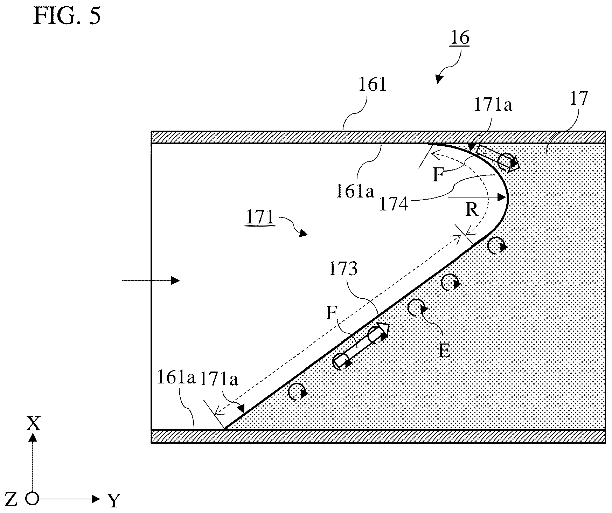

### «Second Embodiment (FIG. 5)»

FIG. 5 is a plan view corresponding to part A of FIG. 2, illustrating a second embodiment of the end surface on the upstream side of the partition plate according to the present invention. In the embodiment illustrated in FIG. 5, the end surface 171 on the upstream side of the partition plate 17 includes one inclined surface 173 and a curved surface 174 that is continuous therewith, and the inclined surface 173 and the curved surface 174 are continuously connected from one end portion 171a of the end surface 171 to the other end portion 171a. In the present embodiment, no gradual sloping surfaces 172 are essential. In addition, the curved surface 174 is included, but is provided at a position other than the central portion 171b of the end surface 171. Furthermore, one inclined surface 173 is included, but a pair of inclined surfaces 173 and 173 is not included.

The inclined surface 173 is a linear surface that is connected to the inner wall surface 161a of the piping main body (the first straight pipe section 161 in the illustrated example) and inclined with respect to the axial direction Y or radial direction X of the piping main body toward the facing inner wall surface 161a. That is, the inclined surface 173 is inclined at an angle of more than 0° and less than 90° with respect to the axial direction Y of the first straight pipe section 161, which is the piping main body. In other words, the inclined surface 173 is a surface that is inclined at an angle of more than 0° and less than 90° with respect to the radial direction X of the first straight pipe section 161, which is the piping main body. The curved surface 174 is a surface that is curved in a convex shape in the downstream direction of the piping main body, with one end portion continuing to the inclined surface 173 and the other end portion connecting to the inner wall surface 161a of the piping main body (the first straight pipe section 161 in the illustrated example). In other words, the curved surface 174 is a U-shaped curved surface with a certain curvature (radius of curvature = R) along the axial direction Y of the piping main body.

In the tail pipe 16 having the partition plate 17 formed in this way, when an airflow such as exhaust gas collides with the end surface 171 on the upstream side of the partition plate 17, vortices of the airflow caused by the exhaust gas is generated around the end surface 171. The vortices are indicated by circular arrows E in FIG. 5. By providing the inclined surface 173 on the end surface 171 on the upstream side of the partition plate 17, the vortices E are generated, and the negative pressure generated by the vortices E causes the airflows of the exhaust gas to flow along the inclined surface 173 of the partition plate 17 (indicated by arrows F in FIG. 5), slightly downstream of the inclined surface 173. The airflows F of the exhaust gas collide with the small vortices E before they grow immediately after they are generated around the end surface 171 of the partition plate 17, and the vortices E can be made to disappear while still in their small state. Accordingly, the generation of large vortices E1 (see the third embodiment illustrated in FIG. 6) generated by the growth of small vortices E can be suppressed, and the airflow noise generated by the large vortices E1 and the increase in ventilation resistance caused by the generation of the large vortices can be suppressed.

In addition, by providing the curved surface 174 on the end surface 171 on the upstream side of the partition plate 17, the airflow F flowing from the inclined surface 173 and the airflow F flowing from the curved surface 174 on the opposite side to the inclined surface 173 can be made to merge coaxially to reduce the speed of the airflows F, thereby reducing the speed of the airflows F to almost zero and making it possible to suppress collision with the inner wall surface 161a of the tail pipe 16. As a result, the function of suppressing increases in airflow noise and ventilation resistance can be further improved.

### «Third Embodiment (FIG. 6)»

FIG. 6 is a plan view corresponding to part A of FIG. 2, illustrating a third embodiment of the end surface on the upstream side of the partition plate according to the present invention. In the embodiment illustrated in FIG. 6, the end surface 171 on the upstream side of the partition plate 17 includes one gradual sloping surface 172, one inclined surface 173 that is continuous with the gradual sloping surface 172, and one parallel surface 175 that is continuous with the inclined surface 173, and the gradual sloping surface 172, the inclined surface 173, and the parallel surface 175 are continuously connected from one end portion 171a of the end surface 171 to the other end portion 171a. In the present embodiment, no curved surface 174 is essential. In addition, one gradual sloping surface 172 and one inclined surface 173 are included, but a pair of gradual sloping surfaces 172 and 172 and a pair of inclined surfaces 173 and 173 are not included. Furthermore, the parallel surface 175 other than the gradual sloping surface 172, the inclined surface 173, and the curved surface 174 is included.

The gradual sloping surface 172 is a surface that connects the end portion 171a of the end surface 171 on the upstream side of the partition plate 17 to the inner wall surface 161a of the piping main body (the first straight pipe section 161 in the illustrated example) with a smooth curve. Gradual sloping means that the inclination is gradually changed, and the gradual sloping surface 172 is a surface that is gradually angled so as to smoothly connect to the inclined surface 173 in the end surface 171. The inclined surface 173 is a linear surface that is continuous with the gradual sloping surface 172 and inclined toward the other end portion 171a of the end surface 171 on the upstream side of the partition plate 17 with respect to the axial direction Y or radial direction X of the piping main body. That is, the inclined surface 173 is inclined at an angle of more than 0° and less than 90° with respect to the axial direction Y of the first straight pipe section 161, which is the piping main body. In other words, the inclined surface 173 is a surface that is inclined at an angle of more than 0° and less than 90° with respect to the radial direction X of the first straight pipe section 161, which is the piping main body. The parallel surface 175 is a linear surface that is continuous with the inclined surface 173 and is parallel to the radial direction X of the piping main body (the first straight pipe section 161 in the illustrated example).

In the tail pipe 16 having the partition plate 17 formed in this way, when an airflow such as exhaust gas collides with the end surface 171 on the upstream side of the partition plate 17, vortices of the airflow caused by the exhaust gas is generated around the end surface 171. The vortices are indicated by circular arrows E in FIG. 6. Around the parallel surface 175, vortices E of the airflow caused by the exhaust gas change from a small state to large vortices E1, and the generation of many such large vortices E1 increases the airflow noise and ventilation resistance. Fortunately, however, by providing the inclined surface 173 on the end surface 171 on the upstream side of the partition plate 17, the vortices E are generated, and the negative pressure generated by the vortices E causes the airflows of the exhaust gas to flow along the inclined surface 173 of the partition plate 17 (indicated by arrow F in FIG. 6), slightly downstream of the inclined surfaces 173. The airflow F of the exhaust gas collides with the small vortices E before they grow immediately after they are generated around the end surface 171 of the partition plate 17, and the vortices E can be made to disappear while still in their small state. Accordingly, around the inclined surface 173, the generation of large vortices E1 generated by the growth of small vortices E can be suppressed, and the airflow noise generated by the large vortices E1 and the increase in ventilation resistance caused by the generation of the large vortices can be suppressed.

Moreover, by providing the gradual sloping surface 172 on the corresponding end portion 171a of the end surface 171 on the upstream side of the partition plate 17, the airflows of exhaust gas that have flowed along the inner wall surface 161a of the tail pipe 16 can easily follow the inclined surface 173 of the partition plate 17. This allows the airflows F to flow closer to the end surface 171 of the partition plate 17 where the vortices E are generated, and the airflows can collide with the vortices E while they are still small, causing the vortices E to disappear. As a result, the function of suppressing increases in airflow noise and ventilation resistance can be improved.

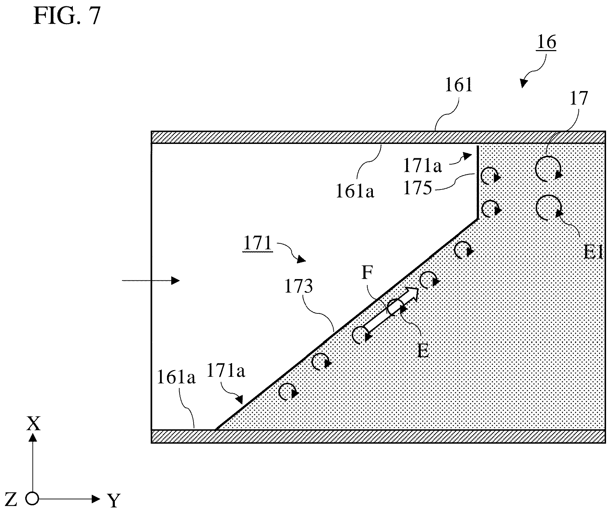

### «Fourth Embodiment (FIG. 7)»

FIG. 7 is a plan view corresponding to part A of FIG. 2, illustrating a fourth embodiment of the end surface on the upstream side of the partition plate according to the present invention. In the embodiment illustrated in FIG. 7, the end surface 171 on the upstream side of the partition plate 17 includes one inclined surface 173 and one parallel surface 175 that is continuous with the inclined surface 173, and the inclined surface 173 and the parallel surface 175 are continuously connected from one end portion 171a of the end surface 171 to the other end portion 171a. In the present embodiment, no gradual sloping surface 172 is essential and also no curved surface 174 is essential. In addition, one inclined surface 173 is included, but a pair of inclined surfaces 173 and 173 is not included. Furthermore, the parallel surface 175 other than the gradual sloping surface 172, the inclined surface 173, and the curved surface 174 is included.

The inclined surface 173 is a linear surface that is continuous with the inner wall surface 161a of the piping main body (the first straight pipe section 161 in the illustrated example) and inclined toward the other end portion 171a of the end surface 171 on the upstream side of the partition plate 17 with respect to the axial direction Y or radial direction X of the piping main body. That is, the inclined surface 173 is inclined at an angle of more than 0° and less than 90° with respect to the axial direction Y of the first straight pipe section 161, which is the piping main body. In other words, the inclined surface 173 is a surface that is inclined at an angle of more than 0° and less than 90° with respect to the radial direction X of the first straight pipe section 161, which is the piping main body. The parallel surface 175 is a linear surface that is continuous with the inclined surface 173 and is parallel to the radial direction X of the piping main body (the first straight pipe section 161 in the illustrated example).

In the tail pipe 16 having the partition plate 17 formed in this way, when an airflow such as exhaust gas collides with the end surface 171 on the upstream side of the partition plate 17, vortices of the airflow caused by the exhaust gas is generated around the end surface 171. The vortices are indicated by circular arrows E in FIG. 7. Around the parallel surface 175, vortices E of the airflow caused by the exhaust gas change from a small state to large vortices E1, and the generation of many such large vortices E1 increases the airflow noise and ventilation resistance. Fortunately, however, by providing the inclined surface 173 on the end surface 171 on the upstream side of the partition plate 17, the vortices E are generated, and the negative pressure generated by the vortices E causes the airflows of the exhaust gas to flow along the inclined surface 173 of the partition plate 17 (indicated by arrow F in FIG. 7), slightly downstream of the inclined surfaces 173. The airflow F of the exhaust gas collides with the small vortices E before they grow immediately after they are generated around the end surface 171 of the partition plate 17, and the vortices E can be made to disappear while still in their small state. Accordingly, around the inclined surface 173, the generation of large vortices E1 generated by the growth of small vortices E can be suppressed, and the airflow noise generated by the large vortices E1 and the increase in ventilation resistance caused by the generation of the large vortices can be suppressed.

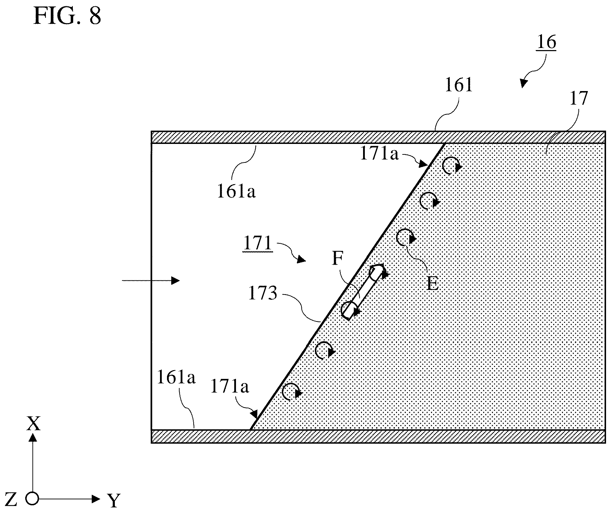

### «Fifth Embodiment (FIG. 8)»

FIG. 8 is a plan view corresponding to part A of FIG. 2, illustrating a fifth embodiment of the end surface on the upstream side of the partition plate according to the present invention. In the embodiment illustrated in FIG. 8, the end surface 171 on the upstream side of the partition plate 17 includes only one inclined surface 173, and the one inclined surface 173 is linearly continuous from one end portion of the end surface 171 to the other end portion. In the present embodiment, no gradual sloping surface 172 is essential and also no curved surface 174 is essential. In addition, one inclined surface 173 is included, but a pair of inclined surfaces 173 and 173 is not included. Furthermore, a parallel surface 175 other than the gradual sloping surface 172, the inclined surface 173, and the curved surface 174 is not included.

The inclined surface 173 is a linear surface that is continuous with the inner wall surface 161a of the piping main body (the first straight pipe section 161 in the illustrated example) at both end portions 171a and 171a of the end surface 171, and inclined from one end portion 171a of the end surface 171 on the upstream side of the partition plate 17 toward the other end portion 171a with respect to the axial direction Y or radial direction X of the piping main body. That is, the inclined surface 173 is inclined at an angle of more than 0° and less than 90° with respect to the axial direction Y of the first straight pipe section 161, which is the piping main body. In other words, the inclined surface 173 is a surface that is inclined at an angle of more than 0° and less than 90° with respect to the radial direction X of the first straight pipe section 161, which is the piping main body.

In the tail pipe 16 having the partition plate 17 formed in this way, when an airflow such as exhaust gas collides with the end surface 171 on the upstream side of the partition plate 17, vortices of the airflow caused by the exhaust gas is generated around the end surface 171. The vortices are indicated by circular arrows E in FIG. 8. By providing the inclined surface 173 on the end surface 171 on the upstream side of the partition plate 17, the vortices E are generated, and the negative pressure generated by the vortices E causes the airflows of the exhaust gas to flow along the inclined surface 173 of the partition plate 17 (indicated by arrow F in FIG. 8), slightly downstream of the inclined surfaces 173. The airflow F of the exhaust gas collides with the small vortices E before they grow immediately after they are generated around the end surface 171 of the partition plate 17, and the vortices E can be made to disappear while still in their small state. Accordingly, around the inclined surface 173, the generation of large vortices E1 generated by the growth of small vortices E can be suppressed, and the airflow noise generated by the large vortices E1 and the increase in ventilation resistance caused by the generation of the large vortices can be suppressed. Around the one end portion 171a of the inclined surface 173 (the upper end portion 171a illustrated in FIG. 8), the vortices E of the airflow caused by the exhaust gas change from a small state to large vortices E1.

As described above, in the fluid piping of the present embodiment, which includes a tail pipe 16 that allows a fluid to flow through its inside and a partition plate 17 that divides the inside of the tail pipe 16 into two or more flow channels, the end surface 171 on the upstream side of the partition plate 17 includes an inclined surface 173 that is inclined with respect to the axial direction Y or radial direction X of the piping main body; therefore, the exhaust gas flow F flows along the inclined surface 173 of the partition plate 17, and this exhaust gas flow F collides with small vortices E before they grow immediately after they are generated around the end surface 171 of the partition plate 17, and the vortices E can be made to disappear while in their small state. This allows the airflow noise generated by the large vortices E1 and the increase in ventilation resistance caused by the generation of the large vortices to be suppressed.

Moreover, in the fluid piping of the present embodiment, the inclined surface 173 includes a gradual sloping surface 172 that connects the end portion 171a of the end surface 171 on the upstream side of the partition plate 17 and the inner wall surface 161a of the tail pipe 16, and the airflow of exhaust gas that has flowed along the inner wall surface 161a of the tail pipe 16 is more likely to follow the inclined surface 173 of the partition plate 17. This allows the airflow F to flow closer to the end surface 171 of the partition plate 17 where the vortices E are generated, and the vortices E in a small state can be made to disappear. As a result, it is possible to suppress the airflow noise caused by the large vortices E1 and the increase in ventilation resistance caused by the generation of large vortices.

Furthermore, in the fluid piping of the present embodiment, the end surface 171 on the upstream side of the partition plate 17 includes a curved surface 174 that is continuous with the inclined surface 173 and has a constant curvature R along the axial direction Y of the tail pipe 16, and therefore the airflow F flowing from one side of the curved surface and the airflow F flowing from the other side can be made to merge coaxially to reduce the speed of the airflow F, thereby reducing the speed of the airflow F to almost zero and making it possible to suppress collision with the inner wall surface 161a of the tail pipe 16. As a result, the function of suppressing increases in airflow noise and ventilation resistance can be further improved.

In addition, in the fluid piping of the present embodiment, the end surface 171 on the upstream side of the partition plate 17 includes inclined surfaces 173 and 173 that are inclined from both end portions 171a and 171a of the end surface 171 toward the central portion 171b, and therefore the airflow F flowing from one inclined surface 173 and the airflow F flowing from the other can be made to merge to reduce the speed of the airflow F, thereby reducing the speed of the airflow F to almost zero and making it possible to suppress collision with the inner wall surface 161a of the tail pipe 16. As a result, the function of suppressing increases in airflow noise and ventilation resistance can be further improved.

Moreover, in the fluid piping of the present embodiment, the end surface 171 on the upstream side of the partition plate 17 includes a pair of inclined surfaces 173 and 173 that are inclined from both end portions 171a and 171a of the end surface 171 toward the central portion 171b, and a curved surface 174 that is continuous with each of the pair of inclined surfaces 173 and 173 and has a constant radius of curvature R along the axial direction Y of the tail pipe 16, and therefore the airflow F flowing from one of the inclined surface 173 and the curved surface 174 and the airflow F flowing from the other can be made to merge coaxially to reduce the speed of the airflow F, thereby reducing the speed of the airflow F to almost zero and making it possible to suppress collision with the inner wall surface 161a of the tail pipe 16. As a result, the function of suppressing increases in airflow noise and ventilation resistance can be further improved.

Furthermore, in the fluid piping of the present embodiment, the end surface 171 on the upstream side of the partition plate 17 includes a pair of gradual sloping surfaces 172 and 172 that connect both end portions 171a and 171a of the end surface 171 and respective portions 161a and 161a of the inner wall surface of the tail pipe 16, a pair of inclined surfaces 173 and 173 that are continuous with the pair of gradual sloping surfaces 172 and 172 and inclined toward the central portion 171b of the end surface 171, and a curved surface 174 that is continuous with each of the pair of inclined surfaces 173 and 173 and has a constant radius of curvature R along the axial direction Y of the tail pipe 16, and therefore the airflow of exhaust gas that has flowed along the inner wall surface 161a of the tail pipe 16 is more likely to follow the inclined surface 173 of the partition plate 17. Moreover, the airflow F flowing from one of the inclined surface 173 and the curved surface 174 and the airflow F flowing from the other can be made to merge coaxially to reduce the speed of the airflow F, thereby reducing the speed of the airflow F to almost zero and making it possible to suppress collision with the inner wall surface 161a of the tail pipe 16. As a result, the function of suppressing increases in airflow noise and ventilation resistance can be further improved.

In addition, in the fluid piping of the present embodiment, the inclined surface 173 extends from one end portion 171a of the end surface 171 on the upstream side of the partition plate 17 to the other end portion 171a, and the small vortices E can therefore be made to disappear over the entire area of the end surface 171 on the upstream side of the partition plate 17. This makes it possible to suppress the airflow noise caused by the large vortices E1 and the increase in ventilation resistance caused by the generation of large vortices.

The outlet pipe 15 or tail pipe 16 of the above embodiment corresponds to the piping main body of the present invention.

### [Description of Reference Numerals]

- 1: Automotive muffler
- 11: Muffler main body
- 12: Left end plate
- 13: Right end plate
- 14: Inlet pipe
- 15: Outlet pipe
- 16: Tail pipe
- 161: First straight pipe section
- 162: Curved pipe section
- 163: Second straight pipe section
- 17: Partition plate
- 171: End surface on upstream side
- 171a: End portion
- 171b: Central portion
- 172: Gradual sloping surface
- 173: Inclined surface
- 174: Curved surface
- 175: Parallel surface
- 176: End surface on downstream side

## Claims

1. A fluid piping comprising:
a piping main body that allows a fluid to flow through its inside; and
a partition plate that divides the inside of the piping main body into two or more flow channels along an axial direction of the piping main body,
the partition plate having an end surface on its upstream side, the end surface including an inclined surface that is inclined with respect to the axial direction of the piping main body.

2. The fluid piping according to claim 1, wherein the end surface on the upstream side of the partition plate includes a gradual sloping surface that connects an end portion of the end surface on the upstream side of the partition plate and an inner wall surface of the piping main body.

3. The fluid piping according to claim 1 or 2, wherein the end surface on the upstream side of the partition plate includes a curved surface that is continuous with the inclined surface and curves in a downstream direction of the piping main body.

4. The fluid piping according to any one of claims 1 to 3, wherein the end surface on the upstream side of the partition plate includes inclined surfaces that are inclined from both end portions of the end surface toward a central portion.

5. The fluid piping according to any one of claims 1 to 4, wherein the end surface on the upstream side of the partition plate includes:
a pair of inclined surfaces that are inclined from both end portions of the end surface toward a central portion; and
a curved surface that is continuous with each of the pair of inclined surfaces and curves in a downstream direction of the piping main body.

6. The fluid piping according to any one of claims 1 to 5, wherein the end surface on the upstream side of the partition plate includes:
a pair of gradual sloping surfaces that connect both end portions of the end surface and respective portions of an inner wall surface of the piping main body;
a pair of inclined surfaces that are continuous with the pair of gradual sloping surfaces and inclined toward a central portion of the end surface; and
a curved surface that is continuous with each of the pair of inclined surfaces and curves in a downstream direction of the piping main body.

7. The fluid piping according to claim 1, wherein the inclined surface extends from one end portion of the end surface on the upstream side of the partition plate to another end portion.

8. The fluid piping according to any one of claims 1 to 7, wherein the fluid is exhaust gas from an automotive engine, cooling water for an automotive engine, a refrigerant for a cooling cycle of an automotive air conditioning device, or conditioned air from an automotive air conditioning device.

9. The fluid piping according to any one of claims 1 to 7, wherein it is used as an exhaust pipe including a muffler of an automobile engine, a cooling water piping of an automobile engine, a refrigerant piping of an automobile air conditioning device, or an air duct of an automobile air conditioning device.
